# EUROPEAN PATENT SPECIFICATION

(11) **EP 2 895 585 B1**
(45) Date of publication and mention of the grant of the patent: **30.10.2019**
(21) Application number: 13759760.5
(22) Date of filing: 11.09.2013
(51) Int. Cl.: C10M 177/00, C10M 107/44

(54) **PROCESS FOR PRODUCING A DRY POLYAMIDE-IMIDE FILM WITH HIGH GALLING RESISTANCE ON A THREADED TUBULAR COMPONENT FROM AN AQUEOUS DISPERSION WHICH IS FREE OF CARCINOGENIC SUBSTANCES**
VERFAHREN ZUR HERSTELLUNG EINES TROCKENEN POLYAMID-IMID-FILMS MIT ERHÖHTER BESTÄNDIGKEIT GEGEN ABREIBUNGSVERSCHLEISS AUF EINER RÖHRENFÖRMIGEN GEWINDEKOMPONENTE AUS EINER WÄSSRIGEN DISPERSION OHNE KARZINOGENE SUBSTANZEN
PROCÉDÉ DE PRODUCTION D'UN FILM DE POLYAMIDE-IMIDE SEC AYANT UNE RÉSISTANCE ÉLEVÉE AU GRIPPAGE SUR UN COMPOSANT TUBULAIRE FILETÉ À PARTIR D'UNE DISPERSION AQUEUSE QUI EST EXEMPTE DE SUBSTANCES CANCÉRIGÈNES

(30) Priority: 12.09.2012 FR 1202427
(43) Date of publication of application: 22.07.2015
(73) Proprietor: VALLOUREC OIL AND GAS FRANCE, 59620 Aulnoye-Aymeries (FR); Nippon Steel Corporation, Tokyo 100-8071 (JP)
(72) Inventor: GOUIDER, Mohamed, F-69300 Caluire-et-Cuire (FR); GARD, Eric, F-69730 Genay (FR); PINEL, Eliette, F-01600 Sainte-Euphémie (FR); PETIT, Mikael, F-69400 Villefranche sur Saône (FR)
(74) Representative: Casalonga
(86) International application number: PCT/EP2013/068799
(87) International publication number: WO 2014/041017

(56) References cited:
- US-A- 5 560 978
- US-A1- 2003 159 764
- US-A1- 2003 160 446
- US-A1- 2009 265 913

## Description

The present invention relates to a process for producing a dry film with high galling resistance on a tubular element for drilling and/or operating hydrocarbon wells, and more precisely a process for producing a dry film with high galling resistance on the threaded end of such an element. This end may be male or female in type and can be connected to a corresponding end of an analogous element in order to form a joint or a connection.

The disclosure also relates to a threaded connection resulting from connecting two tubular elements by makeup.

The term "tubular element for drilling and operating hydrocarbon wells" means any element with a substantially tubular shape that can be connected to another element of the same or different type, in particular in order to constitute either a stem for excavating a hydrocarbon well or a work over riser, or, for example, a riser for operating such a well or a casing string or tubing string used in operating a well. The invention is also applicable to elements used in a drill stem, such as drill pipes, heavy weight drill pipes, drill collars and portions of pipe and heavy weight pipe tool joints.

Each tubular element comprises an end portion provided with a male threaded zone or a female threaded zone for making up with a corresponding end portion of an analogous element. Once connected in this manner, the elements form what is known as a joint or a connection.

Such threaded tubular components of a connection are joined together under predefined loads in order to comply with the interference fit and seal demands imposed by the service conditions. Further, it should be understood that the threaded tubular components may have to undergo several makeup-breakout cycles, in particular in service.

The conditions for using such threaded tubular components give rise to various types of loading, which make it necessary to use films on the sensitive portions of such components such as threaded zones, abutting zones or the sealing surfaces.

Thus, makeup operations are generally carried out under high axial load, for example because of the weight of a tube several metres in length to be made up via the threaded connection, possibly aggravated by a slight misalignment of the axis of the threaded elements to be connected. This gives rise to risks of galling at the threaded zones and/or at the metal/metal sealing surfaces. The threaded zones as well as the metal/metal sealing surfaces are routinely coated with lubricants.

Furthermore, the threaded tubular components are often stored, then made up in an aggressive environment. This is the case, for example, in an offshore situation in the presence of saline mist or in an onshore situation in the presence of sand, dust and/or other pollutants. Thus, it is necessary to use films that counter corrosion on the surfaces that are intended to cooperate during makeup (in the case of the threaded zones) or come into interfering contact (in the case of the metal/metal sealing surfaces and the abutments).

However, because of environmental regulations, it transpires that the use of greases complying with API (American Petroleum Institute) standard RP 5A3 does not constitute a long-term solution because such greases are caused to be extruded from the tubular components and released into the environment or into the well, causing plugs which require special cleaning operations.

In order to solve the problems occurring with long-term corrosion resistance, galling resistance and environmental considerations, solid dry films (i.e. not pasty, unlike greases), lubricants and protectors have been developed.

Since 1969, Whitford have proposed high performance XYLAN® coatings starting from a polyamide-imide and fluoropolymer mixture for threaded systems or threaded fasteners which require the friction in rapid makeup/breakout operations to be adapted. Since 2002, in the context of threaded connections, Sumitomo Metal Industries have been studying coatings based on polyamide-imide resin to lubricate and ensure galling resistance during makeup, as described in documents EP 1 378 698 and EP 1 959 179.

Whitford and SMI principally proposed the production of dry films from a polyamide-amic acid precursor dissolved in a polar solvent or in an ethanol/toluene mixture. The dry film generally contains a filler in order to ensure lubrication as a function of the contact pressures in the threading. The proportion of fillers is relatively high, with a pigment/binder weight ratio in the range 0.25 to 4, preferably greater than 3. The dry film is thus advantageously sacrificial and sufficiently wear resistant as a function of the selected solid lubricant (MoS₂, WS₂, PTFE).

The polar solvents, namely organic nitrogen-containing compounds, aliphatic ketones, ethers, or chlorinated aromatics, used to dissolve the polyamide-imide resin generally have a negative impact on the attraction of polyamide-imide resins as a film, for example because those which have a low boiling point are flammable, because long drying periods are required, often under reduced pressure for those with a high boiling point, or because of their toxicity if ingested through the skin, respiratory system or digestive system.

In addition, the polyamide-imide film is generally formed after drying at a temperature in the range 150-280°C. In this temperature range, the solvent or solvents necessary for application and film formation are completely or partially evaporated.

Such dried polyamide-imide films are for instance described in the patent applications US 2003/160446

In view of the regulations regarding the working environment (Directive 2004/37/EC from the European Parliament and Council dated 29^{th} April 2004 regarding the protection of workers against risks linked to exposure to carcinogenic or mutagenic agents in the workplace) and the classification of evaporated substances (Commission Directive 2009/2/EC dated 15^{th} January 2009, amending, for the purposes of its adaptation to technical progress, for the 31^{st} time, Council Directive 67/548/EEC on the approximation of (EC) Rule no 1272/2008 European Parliament and Council dated 16^{th} December 2008 relating to the classification, labelling and packaging of substances and mixtures), the risk to the user is particularly high.

Polar solvents (toluene, xylene), in particular polar aprotic solvents containing nitrogen, such as NMP, N,N-dimethylacetamide (DMAc), N,N-dimethylformamide (DMF), hexamethylphosphoramide (HMPA), etc, employed when forming a polyamide-imide film are substances which are classified as carcinogenic, mutagenic or reprotoxic (CMR) which are subject to prohibition or restricted use in many applications.

The limiting concentration thresholds for the most sensitive carcinogenic and mutagenic substances, classed as 1A (can cause cancer), 1B (may induce a genetic anomaly), are 0.1% or less in mixtures and 0.3% or less for reprotoxic substances. Other CMR substances of class 2, deemed to be of concern for fertility and human development, have to be in concentrations of 1% or less.

The classification of the polar aprotic solvents used and their known toxicity is given in the table below.

| Substance name | CMR classification |
|---|---|
| N,N-dimethylacetamide | Reprotoxic cat. 1B |
| N,N-dimethylformamide | Reprotoxic cat. 1B |
| Hexamethylphosphoramide | Carcinogenic and mutagenic cat. 1B |
| N-methylpyrrolidone | Reprotoxic cat. 1B |
| Toluene | Reprotoxic cat. 2 |

The new classification for CMR substances in classes 1A, 1B and 2 will be applicable to mixtures from June 2015, and so it would be appropriate to provide a novel alternative in order to prevent the risk of chemical exposure to CMR agents in application of the French Labour Code (article R4411-73 and articles R231-56 to R231-56-12). Starting from this point, the present invention proposes coating a threaded element intended for drilling and/or operating a hydrocarbon well with a stable aqueous dispersion of a polyamide-imide polymer containing no CMR substances, and no flammable substances, in polyamide-imide polymer containing no CMR substances, and no flammable substances, in order to obtain a dry film of polyamide-imide which is adhesive, protective and lubricant with a coefficient of friction which is suitable for reducing the shear loads in the threaded portion and for increasing the clamping torque at the sealing surfaces.

In particular, the present invention concerns a process for producing a dry film with a high galling resistance on a threaded element for drilling and/or operating a hydrocarbon well, characterized in that it comprises at least the following steps:
- forming a stable dispersion comprising a polyamide-imide powder, a polar aprotic solvent with a boiling point of more than 180°C at 760 mm Hg, and water;
- applying the dispersion to one of the ends (1, 2) of said threaded element at a temperature in the range 20°C to 40°C;
- drying the coated end,
- said polar aprotic solvent being dimethylsulphoxide.

The dispersion may be produced with at least:
- a step in which the polyamide-imide powder is dissolved in the polar aprotic solvent with a boiling point of more than 180°C at 760 mm Hg, in order to obtain a polyamide-imide solution;
- a step in which the polymer solution is precipitated in an aqueous mixture at ambient temperature;
- a step in which the precipitated solution is dispersed by milling the polyamide-imide particles.

The dispersion may also be produced with at least:
- a step in which the polyamide-imide powder is dispersed by mechanical agitation in a homogeneous mixture containing water and a polar aprotic solvent with a boiling point of more than 180°C at 1013 hPa (760 mm Hg);

The step for dissolving the polyamide-imide powder may be carried out at a temperature of more than 50°C, preferably more than 80°C.

The precipitation step may be carried out at ambient temperature in an aqueous mixture containing distilled water and at least one non-ionic surfactant, the aqueous mixture being free of polyoxyethylenated alkylphenyl ethers.

The step for dispersion of the polyamide-imide powder by mechanical agitation may be carried out at a temperature in the range 60°C to 80°C in a homogeneous mixture containing distilled water, the polar aprotic solvent and at least one non-ionic surfactant.

The non-ionic surfactant, selected from the group constituted by polyoxyethylenated acetylenic diols and high molecular weight block copolymers containing groups with a high affinity for pigments, may have a hydrophilic-lipophilic balance of 13 or less, preferably 8 or less.

The stabilization by ultrasound treatment may be carried out at a minimum frequency of 20 kHz and a minimum power of 200 W.

The milling may be carried out using a bead mill, the milling yield being in the range 40% to 95%, preferably more than 90%.

The size of the polyamide-imide polymer particles in dispersion may be less than 70 µm, preferably less than 20 µm and primarily less than 10 µm.

The aqueous polyamide-imide dispersion may comprise a thixotropic agent which is thermally stable at temperatures of 250°C or more selected from the group constituted by organically modified sheet silicates of the laponite, saponite, bentonite or smectite type with a pH in 2% by weight suspension in the range 9 to 11.

The aqueous polyamide-imide dispersion may comprise in the range 0.05% to 0.4% by weight of a bactericidal and/or fungicidal agent for protection in storage and for protection of the film, selected from the group constituted by iodopropynyl-butyl-carbamate, benzisothiazolinone, chloromethyl-isothiazolinone and methylisothiazolinone.

The aqueous polyamide-imide dispersion may comprise in the range 0.05% to 0.4% by weight of a bactericidal and/or fungicidal agent for protection in storage and for protection of the film, selected from the group constituted by iodopropynyl-butyl-carbamate, benzisothiazolinone, chloromethyl-isothiazolinone and methylisothiazolinone.

The aqueous polyamide-imide dispersion may comprise a spreading agent of the polyether modified dimethylpolysiloxane type to reduce the surface tension.

The aqueous polyamide-imide dispersion may comprise an emulsion of hydrophobic components containing silicone and/or paraffinic mineral oils.

The polyamide-imide (PAI) powder may be selected from aromatic polyamide-imide powders.

The selected aromatic polyamide-imide may be obtained from a reaction between a trimellitic acid anhydride chloride and an aromatic diamine selected from compounds other than 4,4'-methylenedianiline.

The selected polyamide-imide may be selected from the group formed by aromatic polyamide-imide polymers with a molecular mass in the range 10000 to 30000 g/mole, and a glass transition temperature in the range 220°C to 285°C.

The maximum particle size in the polyamide-imide powder may be less than 150 µm, 95% of the particles having a size of less than 75 µm.

The mean volume granulometry of the polyamide-imide particles may be in the range 30 to 40 µm.

The polar aprotic solvent is dimethylsulphoxide.

The stable dispersion may further comprise solid lubricating particles selected from the list constituted by graphite, boron nitrides, Bi₂S₃, MoS₂, WS₂ and fluoropolymers.

The stable dispersion may further comprise solid anti-abrasive particles selected from the list constituted by cristobalite, mica, colloidal silica, para-phenyleneterephthalamide (aramid) and silicone resin.

The stable dispersion may comprise a or a combination of corrosion-inhibiting pigments having a synergistic effect.

The step for applying the dispersion by spraying onto the end (1,2) of the threaded element may be preceded by a supplemental step for preparing the surface selected from the list constituted by sand blasting, conversion treatments, electrolytic deposition and non-reactive treatments.

The step for applying the dispersion by spraying onto the end (1, 2) of the threaded element may be completed by a supplemental step for curing said aqueous dispersion applied to the threaded element at temperatures in the range 230°C to 325°C.

After curing, the thus-coated threaded element may be cooled to ambient temperature.

The thickness of the dry film may be greater than the roughness of the surface preparation and in the range 10 to 45 µm.

The dispersion may be applied to the whole of the threaded zone of the threaded element.

The dispersion may be applied to the sealing surface of the threaded element.

Some characteristics and advantages of the invention are set out in more detail in the description below made with reference to the accompanying drawings.
Figure 1 represents a polycarboxylic diimide monomer and an aromatic diamine comonomer;
Figure 2 represents an imide unit on the left and an amic acid on the right;
Figure 3 represents a 1,3-polyamide-imide configuration on the left and a 1,4-polyamide-imide configuration on the right;
Figure 4 represents the granulometry of an aqueous dispersion of polyamide-imide obtained by a process in accordance with the invention;
Figure 5 represents the freezing point for a water-dimethylsulphoxide mixture as a function of the fraction of dimethylsulphoxide;
Figure 6 is a diagrammatic view of a connection resulting from connecting two tubular components by makeup;
Figures 7, 8, 9, 10 and 11 show test graphs.

First of all, the process consists of preparing an aqueous dispersion of a ready-to-use polyamide-imide polymer. Said process then comprises at least one step for applying said dispersion as well as a curing step.

Amorphous polyamide-imide polymers (PAIs) have mechanical bending, impact resistance and resistance to breaking properties which are superior to other heterocyclic polymers, namely polyimides (PI), polyetherimides (PEI), phenylene polysulphide (PPS) or polyether etherketone (PEEK). It can also be used to improve extrusion or moulding operations (as well as overmoulding), due in part to their having glass transition temperatures which are lower than the corresponding polyimides (Slade H Gardner "An investigation of the structure-property relationships for high performance thermoplastic matrix, carbon fibre composites with a tailored polyimide interphase", 1998).

The polyamide-imide polymer is preferably selected from aromatic polyamide-imides. Aromatic polyamide-imides are of particular interest in producing high temperature-resistant films and fibres.

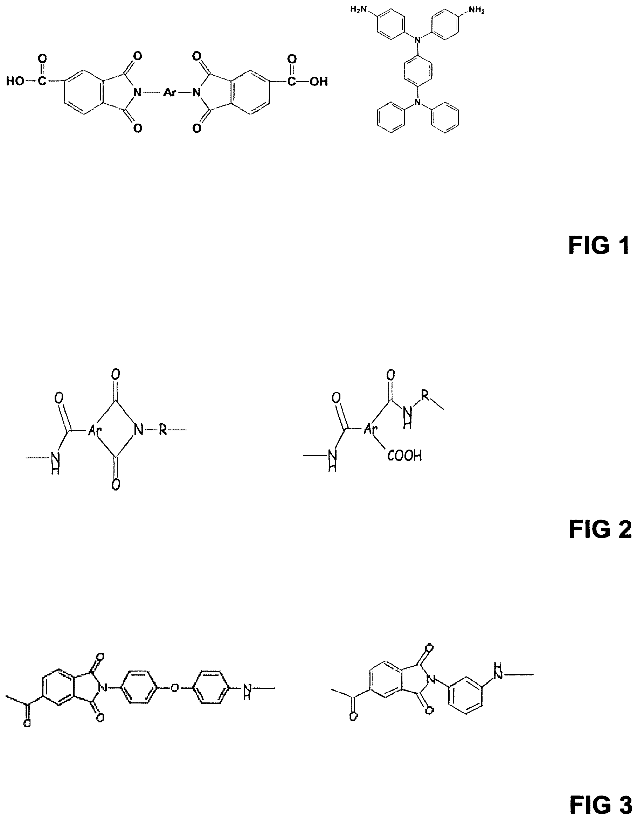

The aromatic polyamide-imide polymer may be synthesized by a polycondensation reaction between a polycarboxylic diimide monomer and a diamine or diisocyanate comonomer in a polar solvent. Figure 1 represents an example with a dibasic carboxylic acid imide on the left and a diamine on the right.

Synthesis of the polymer may also involve polycondensation of a diamine and a trimellitic acid anhydride chloride in a bipolar aprotic solvent. The reaction between the diamine and an anhydride produces an intermediate product, polyamic acid, which has to be cyclized. Cyclization or imidization of this precursor polymer by a chemical or thermal pathway gives rise to the final polyamide-imide. As can be seen in Figure 2, the precursor obtained may have alternating imide and amic acid units, and preferably an imide unit proportion of more than 90%. Figure 2 shows an imide unit on the left and an amic acid unit on the right in more detail.

As can be seen in Figure 3, depending on the diamine selected, the polymer may have a 1,3-polyamide-imide configuration, a 1,4-polyamide-imide configuration or a mixture. Figure 3 shows a 1,3-polyamide-imide configuration on the left and a 1,4-polyamide-imide configuration on the right in more detail.

For the purposes of the invention, the selected aromatic polyamide-imide polymer is preferably obtained by a pathway which consists of reacting a trimellitic acid anhydride chloride and an aromatic diamine selected from compounds other than 4,4'-methylenedianiline, which is classified as a CMR substance.

The selected polyamide-imide polymer is preferably selected from the group formed by aromatic polyamide-imide polymers with a molecular mass in the range 10000 to 30000 g/mole, a glass transition temperature in the range 220°C to 285°C, a molar fraction of polyamide-amic acid of 0.1 or less or an acid index of 20 mgKOH/g or less.

The thermal resistance of the polyamide-imide polymer increases with its molecular mass and its degree of imidization, and so an aromatic polyamide-imide polymer with a high molecular mass will advantageously be selected in order to increase the performance of the film (Robertson G, Polymers 2004, vol 45, pp 1111-1117).

In an advantageous embodiment, the Applicant proposes preparing an aqueous dispersion from a polyamide-imide powder with a maximum particle size of less than 150

In an advantageous embodiment, the Applicant proposes preparing an aqueous dispersion from a polyamide-imide powder with a maximum particle size of less than 150 µm wherein 95% of the particles have a size of less than 75 µm. Preferably, the mean granulometry by volume is in the range 30 to 40 µm.

In a first variation and in a first step, the polyamide-imide polymer is dissolved in a polar aprotic solvent boiling point of more than 180°C at 1013 hPa (760 mm Hg) for which the Hansen total solubility parameters, expressed as MPa^{1/2}, are close to those of the polyamide-imide polymer. The polymer solubility parameters, extracted from the European Polymer Journal, volume 22, Issue 10, 1986, pages 821-825, are approximately 3 MPa^{1/2}.

In order to ensure good stability on dispersion, the difference between the solubility parameters, δsolvent and δpolymer, should preferably be less than a value of 4 where there are strong specific solvent-polymer interactions, as shown by PAI dispersions in a water/NMP mixture, while the respective solubilities of water and NMP are respectively 47.9 MPa^{1/2} and 22.9 MPa^{1/2}.

The polar aprotic solvent is dimethylsulphoxide (DMSO) which has a zero-danger classification. In fact, DMSO is known to be one of the least toxic compounds. Its uses and applications form a compound that is in common use in the pharmacy field (Parcell S, "Sulfur in human nutrition and applications in medicine", Altern Med Rev 2002, vol 7, pp 22-44). DMSO has approximately 40 pharmacological properties which may be beneficial in the prevention, relief or regression of many diseases (Morton W, "DMSO, Nature's Healer", New York; Avery 1993).

Other solvents such as acetone, ethyl acetate, cyclohexanone, 1,3-dioxolane, methylethyl ketone, tetrahydrofuran or triethylamine, which are capable of complying with
the solubility requirements, are clearly prohibited in view of their being classified as highly flammable substances.

The polyamide-imide polymer is preferably dissolved in DMSO at a temperature of more than 50°C with mechanical agitation, preferably at more than 80°C, in order to facilitate dissolution and to avoid recrystallization phenomena at ambient storage temperature.

The proportion of polymer dissolved in the solvent is 35% by weight or less, advantageously 30% or less in order to provide a kinematic viscosity which is acceptable in view of the second step.

In a second step, the solution of polymer, maintained at a minimum temperature of 50°C, is slowly precipitated in an aqueous mixture at ambient temperature. The aqueous mixture contains distilled water and at least one non-ionic surfactant selected from the group constituted by polyoxyethylenated acetylenic diols. The non-ionic surfactant preferably has a hydrophilic-lipophilic balance of 13 or less, preferably 8 or less, in order to reduce the surface tension at equilibrium and the dynamic surface tension and to ensure that the polymer-solvent system is wetted in the water. The aqueous mixture is free of polyoxyethylenated alkylphenyl ethers.

The aqueous mixture may also comprise a thixotropic agent which is thermally stable at temperatures of 250°C or higher selected from the group constituted by organically modified sheet silicates of the laponite, saponite, bentonite or smectite type with a pH in suspension at 2% by weight in the range 9 to 11.

The aqueous mixture may also comprise in the range 0.05% to 0.4% by weight of a bactericidal/fungicidal agent or a synergy to provide protection on storage and protection of the film selected from the group constituted by the following biocidally active substances: iodopropynyl-butyl-carbamate, benzisothiazolinone, chloromethyl-isothiazolinone and methylisothiazolinone.

The present invention comprises a third step of finely milling the suspended particles to ensure mechanical disintegration of the associated particles (agglomerates and aggregates) into finer particles and stabilization of the finer particles produced during dispersion to prevent them from re-agglomerating (or flocculating). Fine milling using a bead mill is carried out at a minimum rate of 600 rpm and at constant power. The bead mill is a vertical or horizontal system with a reirculation system. The diameter of the ceramic or metallic beads is 1 mm or less, preferably 0.4 mm or less. The milling yield is in the range 40% to 95%, preferably more than 90%.

The bead mill is preferably a horizontal system with a recirculation process and comprises a cooled, pressurized milling chamber in order to reduce the milling time.

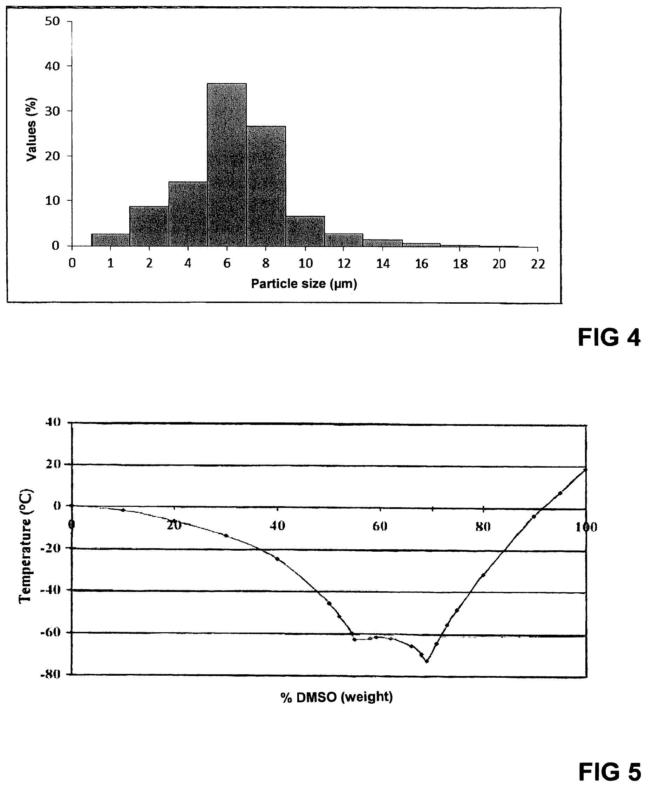

The particle size may be measured in the liquid phase using a CILAS 1064 laser granulometer. The size of the polyamide-imide polymer particles in dispersion is preferably less than 20 µm and primarily less than 10 µm. Figure 4 illustrates the granulometry of an aqueous polyamide-imide dispersion obtained by said process.

The functional pigment fillers are added during milling or as a subsequent addition.

In a second variation, the Applicant proposes dispersing the polyamide-imide polymer in a first step with mechanical agitation (300 to 600 rpm) using a propeller mixer in a water/DMSO with proportions of water and DMSO varying between 60/40 and 20/80 depending on the quantity of polymer to be dispersed. The efficiency of dispersion is given by the shear rate at constant peripheral speed as a function of volume and diameter of the propeller. The temperature of the mixture is advantageously more than 60°C in order to facilitate dispersion and less than 80°C in order to limit evaporation. The aqueous mixture may contain at least one non-ionic surfactant selected from the group constituted by polyoxyethylenated acetylenic diols and high molecular weight block copolymers with groups having a high affinity for the pigments. In a second step, de-agglomeration of the particles and homogenization of the dispersion are ensured by milling or an ultrasound treatment (ultrasonication) either in an ultrasound bath with mechanical agitation, or using an ultrasound probe (HIELSCHER® UIP, SONITUBE®). The frequency and the minimum power are respectively 20 kHz and 200 W. In the case in which the functional pigment fillers are added during mechanical dispersion, the stability of the dispersion is preferably ensured by fine milling, by recirculating the dispersion in a horizontal bead mill with a cooled and pressurized milling chamber.

The functional pigment fillers may also be added during milling or post addition.

The proportion of polyamide-imide in the final dispersion is preferably in the range 5% to 20%. If the concentration is greater than 20% by weight, the viscosity is high, which renders application difficult; if the concentration is less than 5% by weight, it becomes more complicated to form a film of sufficient thickness.

The proportion of co-solvent with respect to the water in the dispersion is preferably in the range 40% to 80% in order to guarantee good stability on cold storage. Figure 5 illustrates the freezing point for a water-dimethylsulphoxide mixture as a function of the dimethylsulphoxide fraction.

The aqueous dispersion may also comprise a modified polyether dimethylpolysiloxane type spreading agent in order to reduce the surface tension and to improve film formation.

Finally, the aqueous dispersion may comprise an anti-foaming agent such as an emulsion of hydrophobic components containing silicone and paraffinic mineral oils in order to facilitate film formation, particularly for high concentrations by volume of pigments.

In conclusion, the aqueous dispersion prepared thereby contains a minimum of 7% by weight of a polyamide-imide polymer formulation.

The aqueous dispersion contains no concentrations of a carcinogenic, mutagenic or reprotoxic substance appearing on the CIRC (IARC), ACGIH, NTP and/or OSHA lists in a concentration of 0.1 % or higher.

The aqueous dispersion has a neutral pH in the range 7 to 7.5, a dynamic viscosity in the range 0.1 to 1 Pa.s at 20°C depending on the proportion of polymer and a stability on storage of at least two weeks at a temperature of -5°C or 40°C.

The polyamide-imide film may be obtained by pneumatic spraying or cold electrostatic spraying. The aqueous dispersion is sufficiently thixotropic to allow it to be applied to a vertical surface. The solvents are evaporated off during a drying phase at 80°C. The dry film is formed after a curing phase at temperatures in the range 230°C to 325°C depending on the polymer, preferably at a temperature which is at least 10°C higher than the glass transition temperature of said polymer. Cooling may be carried out at ambient temperature.

The DMSO co-solvent, moderately volatile and thermally stable at 150°C, is completely evaporated off during the drying step, principally between 40°C and 80°C by elution with water. No decomposition product apart from CO₂, analysed by ATG-IRTF, is detected during the curing step between 230°C and 325°C. The volatile organic compounds given off during the drying phase, principally DMSO and dimethyl sulphide (DMS), is readily recycled by re-condensation.

In order to reduce the shear load in the metal-metal contact, principally in the threaded portion, by means of a dry polyamide-imide film, additives or functional pigment fillers are added to the aqueous dispersion, preferably during milling, to ensure protection of the metallic surface against galling and to provide lubrication, inter alia.

Thus, the aqueous dispersion of PAI may also comprise solid lubricating particles selected from the list constituted by graphite, boron nitride, Bi₂S₃, MoS₂, WS₂ and fluoropolymers.

These solid lubricants may be classified into various categories defined by their functional mechanism and their structure:
- class 1: solid bodies owing their lubricant properties to their crystalline structure, for example graphite or boron nitride, zinc oxide;
- class 2: solid bodies owing their lubricant properties on the one hand to their crystalline structure and on the other hand to a reactive chemical element in their composition, for example molybdenum disulphide MoS₂, graphite fluoride, tin sulphides or bismuth sulphides;
- class 3: solid bodies owing their lubricant properties to their chemical reactivity, for example certain chemical compounds of the thiosulphate type;
- class 4: solid bodies owing their lubricant properties to a plastic or viscoplastic behaviour under frictional load, for example polytetrafluoroethylene (PTFE) or polyamides.

The aqueous dispersion of PAI may comprise solid lubricant powders, alone or in combination, in a proportion in the range 0.01 to 4 as a ratio by weight with respect to the polymer.

The aqueous PAI dispersion may exclusively comprise a fluoropolymer powder (preferably polytetrafluoroethylene with a mean particle size in the range 0.2 to 2 µm) in order to reduce the coefficient of friction and to reduce wear and damage under low load.

The aqueous dispersion of PAI may exclusively comprise a solid class 2 lubricant powder (preferably a WS₂ or a Bi₂S₃ in which the mean particle size is in the range 2 to 8 µm).

The aqueous PAI dispersion may comprise a combination of solid lubricant powders for a synergistic effect, namely principally a class 1 or 2 solid lubricant and a class 4 solid lubricant in order to adjust the coefficient of friction as a function of the clamping zone and to increase the galling resistance. The proportion of class 1 or 2 solid lubricants with respect to the class 4 solid lubricant is in the range 1:1 to 10:1.

Similarly, the aqueous PAI dispersion may further comprise solid anti-abrasive particles in the powder form selected from the list constituted by cristobalite, mica, colloidal silica, para-phenyleneterephthalamide (aramid) and silicone resin.

Finally, the aqueous PAI dispersion may comprise one or a combination of corrosion inhibitor pigments with a synergistic effect.

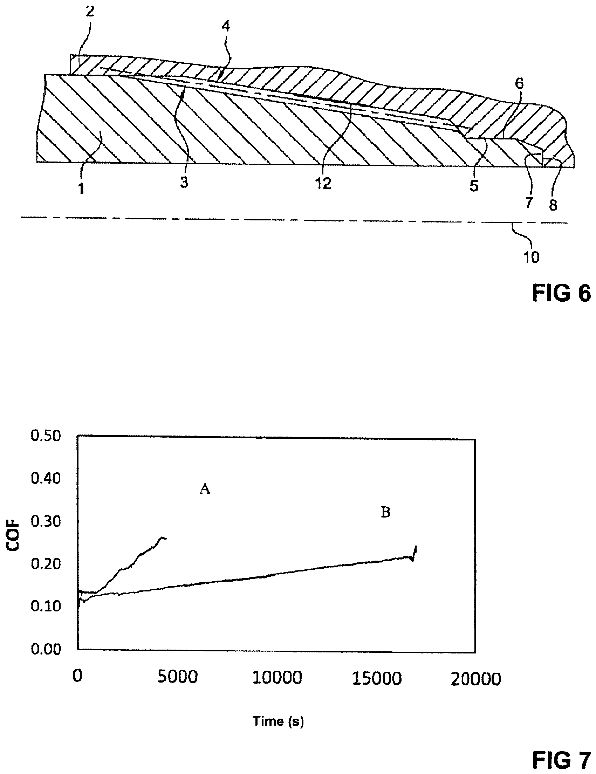

Advantageously, the dry polyamide-imide films obtained in accordance with a process of the invention are of application in threaded connections as is shown in Figure 6. This type of connection comprises a first tubular component with an axis of revolution 10 provided with a male end portion 1 and a second tubular component with an axis of revolution 10 provided with a female end portion 2. The end portions 1 and 2 each have a terminal surface disposed perpendicular to their respective axis of revolution 10 and are respectively provided with a threaded zone 3 and 4, which cooperate with each other for mutual connection of the components by makeup. The thread type of the threaded zones 3 and 4 may be self-locking, trapezoidal, or of another type. In addition, metal/metal sealing surfaces 5, 6, intended to come into sealed interfering contact against each other after connection of the two threaded components by makeup, are respectively provided on the male 1 and female 2 end portions, adjacent to the threaded zones 3, 4. The male end portion 1 has a terminal surface 7 which, when the two components are made up into each other, will abut against a corresponding surface 8 provided on the female end portion 2. The connection also comprises two sealing surfaces 5 and 6 respectively disposed on the end portions 1 and 2 and intended to come into sealed interfering contact when the connection is made up.

In a variation, the abutment between the terminal surface 7 and the corresponding surface 8 may be replaced by threaded zones 3, 4 arrange to cooperate by self-locking interference of the type described, for example, in US 4 822 081, US RE 30 647 or US RE 34467.

As shown in Figure 6, the end portion 1 or 2 of at least one of the tubular components is at least partially coated with a dry film 12 of polyamide-imide in accordance with a process of the invention.

This in particular requires that either a portion or the entirety of the threaded zones 3 and 4 is coated with the dry polyamide-imide film 12.

At the same time, the sealing surfaces 5 and 6 may either both be coated with a dry film 12 or indeed just one surface may be coated.

The dry film is preferably applied to a rough surface. A rough surface increases the contact surface and as a result increases adhesion and the lubricant retention capacity, in particular in the limiting lubrication regime. The surface roughness may be produced by mechanically sand blasting the steel, or it may be produced by means of a surface preparation employing a chemical conversion, such as zinc or manganese phosphatization. It is preferable to have a mean departure for the roughness, Ra, in the range 1 to 3.5 µm and a maximum ridge depth, or Rmax, in the range 10 to 25 µm. The thickness of the formed film must be greater than or equal to the maximum depth of the ridges, or Rmax.

Alternatively, the surface preparation may be an electrolytic deposit, preferably a CuSnZn ternary alloy comprising a Wood's nickel keying sub-layer. A higher Vickers hardness than steel and a low affinity of the deposit for steel provides for an adhesive anti-wear coating on the steel itself in the event of failure of the dry film.

The term "dry film" means a solid film which is not tacky to the touch.

From an experimental viewpoint, the Applicant initially worked on obtaining a stable aqueous dispersion of polyamide-imide polymer. The polyamide-imide polymers used are principally powders sold by Solvay Advanced Polymers under the trade name TORLON® 4000T, which has a purity of more than 99.9%; the glass transition temperature was measured by TGA-SDTA as 265°C.

Secondly, the Applicant produced aqueous dispersions of polyamide-imide polymer with a composition comprising at least one additive selected from the list formed by solid lubricants or corrosion inhibitors. To stabilize the preparations, it was advantageous to add thickening agents, coalescence agents, stabilizers, dispersants and other anti-foaming agents, selected from those which are the most compatible and which respect the operating environment. For the compositions with additives, particular attention was paid to the critical pigment volume (CPV) in order to guarantee the impermeability of the film, and to limit the porosity, the risk of blistering and of triggering the corrosion mechanism.

The dispersion is applied by means of a pneumatic spraying system. The temperature of the mixture and the substrate must be similar, preferably in the range 20°C to 40°C.

The film was coalesced at the application temperature for a period of 5 minutes. Drying for 10 minutes in a temperature range in the range 60°C to 80°C followed by curing for 30 minutes in a temperature range in the range 230°C to 325°C, preferably in the range 275°C to 300°C, completely eliminated the residual water and formed the dry film.

The dry films were produced on carbon steel specimens or low alloy steel specimens with or without surface treatments. The separate treatments could be sand blasting, phosphatization, preferably with manganese, or electrolytic CuSnZn type deposition comprising a sub-layer of Wood's nickel. The thicknesses of the study films were in the range 10 to 45 µm.

All of the dispersions tested had compositions which complied with the proportions listed in the table below.

**Table 1**

| Chemical nature | Composition (% by weight) |
|---|---|
| Water | 30 - 70 |
| DMSO | 30 - 70 |
| Polyamide-imide resin | 5 - 20 |
| Surfactant | 0.5 - 2.5 |
| Stabilizer/thickening agent | 0 - 1 |
| Film formation agents | 0 - 1 |
| Functional pigment fillers | 0 - 20 |
| Preservatives | 0 - 0.05 |

In the dispersion with reference number 1, 45 g of a polyamide-imide polymer powder (Torlon® 4000 TF) dissolved in 283 g of DMSO (ROTIPURAN® ≥ 99.8% p.a, ACS, ISO) was introduced slowly with vigorous agitation into a mixture constituted by 283 g of distilled water, 6 g of a polyoxyethylenated acetylenic diol (Surfynol® 440 or Dynol® 604), 3 g of an organically modified bentonite (Optigel® CK), 1.8 g of a polyether modified polydimethylsiloxane (Byk® 348) and 1.8 g of anti-foaming agent (Byk® 037). The suspension of particles of precipitated polyamide-imide resin was then finely milled in a vertical ceramic bead mill at a rate of 600 rpm. After milling for 24 hours, the aqueous polyamide-imide dispersion obtained after rinsing with a water/DMSO mixture in the initial proportions had a yellow colour, a dynamic viscosity of 500 MPa.s (Brookfield R4, 100 rpm, 20°C), a neutral pH of 7 (10% dilution in water) and at least 90% of the particles had a size of less than 7.5 µm. Because of its suitable thixotropy, the dispersion with reference number 1 had excellent stability on storage in a temperature range in the range -5°C to +40°C. Under extreme storage conditions, the facility of application remained unchanged over three months. However, after verification of the dry extract, dilution with water was possible in the case of storage at +40°C in order to facilitate spray application and to preserve the initial properties.

The dry film obtained from the dispersion with reference number 1 had a thickness in the range 10 to 20 µm. It did not demonstrate any corrosion on carbon steel coated with a manganese phosphatization after 1000 hours of exposure to saline mist. It will be recalled that the neutral saline mist test is carried out in a climatic chamber under the following conditions: 35°C with a 50 g/L saline solution with a density in the range 1.029 to 1.036 at 25°C with a pH in the range 6.5 to 7.2 at 25°C and recovered at a mean rate of 1.5 mL/h.

Intact rust-free samples have to correspond to class Re0 of ISO standard 9227 after exposure. The method provides a means for verifying that the comparative quality of a metallic material with or without corrosion-protective coating is maintained.

In a second stage, the capacity of the film obtained from the dispersion with reference number 1 to be separated from the contacting surfaces, the capacity to lubricate under shear compressive load, the dynamic adhesion and the friction or abrasion resistance force under increasing load were initially evaluated using the scratch test. It will be recalled that the scratch test can be used to evaluate the adhesive force or adhesion of a film to a surface or a surface preparation. It consists of shearing and deforming a film with a spherical bead under an increasing load and can be used to determine the coefficient of friction of the critical load corresponding to the onset of film detachment.

The experimental conditions employed a tungsten carbide bead with a diameter of 5 mm and a metallic carbon steel or Z20C13 steel specimen with a roughness Ra of less than 1 micrometre, as well as the following parameters: an increasing load of 10 N to 310 N or 250 N to 750 N, a bead displacement rate of 2 mm/s, a period of 20 s and a track length of 40 mm. The increasing load of 10 N to 310 N is representative of the contact pressure in the threaded portion. The increasing load of 250 N to 750 N is representative of the contact pressure at the sealing surfaces.

In the dispersions with reference numbers 2 to 5, 67 g of a polyamide-imide polymer (Torlon® 4000 TF) dissolved in 419 g of DMSO (ROTIPURAN® ≥ 99.8% p.a, ACS, ISO) was introduced slowly with vigorous agitation into a mixture constituted by 374 g of distilled water, 18 g of a non-ionic wetting agent (Surfynol® 465), 4 g of a polyphosphate modified synthetic silicate (Laponite® RDS), 3 g of a polyether modified polydimethylsiloxane (Byk® 333) and 3 g of anti-foaming agent (Byk® 037). The suspension of precipitated particles of polyamide-imide resin was then finely milled in a vertical ceramic bead mill at a rate of 600 rpm. Solid lubricating particles such as a suspension of polytetrafluoroethylene in water free of perfluorooctanoic acid and ethoxylated alkylphenol (Dyneon® TF5060GZ), a graphite, a bismuth trisulphide, a tungsten disulphide were introduced alone or in combination during milling. After milling for 24 hours, at least 90% of the particles in dispersion had a size of less than 12.5 µm irrespective of the proportion of additives.

The dry films were obtained following a curing period of 30 minutes at 300°C.

The tribological performances of the films obtained from the dispersions with reference numbers 2 to 5 were compared with other glide films or coatings obtained from aqueous polyamide-imide dispersions containing substances classified as CMR but also with a high performance thermoplastic film having a high wear resistance and obtained from an aqueous dispersion of polyether ether ketone as described in patent WO2011/076350.

The table below records the lubrication performances for the dispersions with reference numbers 2 to 5, each corresponding to a weight ratio between the additive, which is entirely or partially PTFE, and the polyamide-imide. This ratio by weight was in the range 0.25 to 3. The concentrations by volume, calculated using the bulk density, were less than 40% in order to provide sufficient anti-corrosion protection after 336 hours of exposure to saline mist. The substrate was preferably a carbon steel with manganese phosphatization. The thicknesses were in the range 20 to 30 µm.

**Table 2**

| Compositions | Fillers | Solids/PAI weight ratio | Mean CoF (10-310 N) | Mean CoF (250-750 N) |
|---|---|---|---|---|
| Reference 2 | PTFE | 0.25 | 0.085 | - |
| Reference 3 | PTFE | 1 | 0.095 | 0.125 |
| Reference 4 | PTFE | 3 | 0.11 | - |
| Reference 5 | Bi₂S₃/PTFE | 1 | 0.1 | 0.14 |

The coefficient of friction, in the range 0.08 to 0.11, was significantly smaller than the coefficient of friction of 0.13 of a glide coating with reference NTB3308 comprising a combination of solid lubricating particles (MoS₂, graphite, PTFE) and sold by Okitsumo Incorporated. Advantageously, a difference of 0.02 could be interpreted in the context of application to a 7" 32# L80 CS VAM TOP connection by a shouldering torque on makeup which is at least 2000 N.m lower.

It was also established that in the case in which the whole of the end portion 1 or 2 is coated with the dry film, the difference in the coefficient of friction as a function of the feed of 0.03 is advantageous in order to guarantee a low shouldering torque and a sufficient torque on shoulder resistance to ensure a seal of the connection, in contrast to an approach by the competition aimed at coating only the threaded portion.

At the same time, the Applicant tested the galling resistance of the dispersion with reference number 5 by means of the pin-on-vee test. The pin-on-vee test was used in particular to evaluate, at high speeds, the anti-wear and extreme pressure properties of lubricating fluids in accordance with ASTM standard D 2670 and ASTM standard D 3233, but also to evaluate solid lubricants at low rates in accordance with ASTM method D 2625.

The pin-on-vee test is adapted to overcome problems with connections:
- a semi-closed contact geometry (to ensure that the third lubricant body is trapped);
- a pressure-rate interval (PV diagram) which suits that of the connection;
- the possibility of carrying out tests in one direction or in alternating mode for make and break simulations.

The contact geometry of the pin-on-vee test shown consists of a indenter P of carbon steel or alloyed steel with or without manganese phosphatization, mounted in rotation and compressed between two V blocks in the form of a V formed from carbon steel or alloyed steel treated by sand blasting or with an electrolytic CuSnZn deposit or by manganese phosphatization and coated with the test film.

The test conditions employed an applied load of 785 N corresponding to a mean pressure in the contact of 150 MPa, relatively close to that recorded during make up at the start of shouldering at the threaded portion (100-300 MPa) and a pressure-speed modulus (PV) = 11.2 MPa.m/s, close to that establishing the wear rule in the threaded portion at the load flanks where PV = 5 MPa.m/s.

The aim of this test was to simulate and evaluate the galling resistance for the various dry films without it being necessary to carry out the evaluation on connections. This test could be used to compare the performance of the various films with respect to real tests on the connection.

The galling criterion is defined by reference to ASTM standard D 2625-94 regarding the measurement of the loading capacity of a film of solid lubricant and corresponds to a sudden increase in the torque, compared with the initial state, of the order of 1130 N.mm or of the coefficient of friction of the order of 0.15 for a load of 785 N. In general, galling is observed when the applied load decreases, irrespective of the materials and the configuration.

The polyamide-imide film of the dispersion with reference number 5 showed a degree of wear before galling approximately 4 times lower than that of a polyether ether ketone film comprising 30% by weight of a perfluoroalkoxyethylene copolymer.

This test is illustrated in Figure 7, which represents the galling resistance of a block of XC48 carbon steel phosphatized then coated with the dispersion with reference number 5 (curve A) and compared with that of a XC48 carbon steel block phosphatized then coated with a monolayer of polyether ether ketone (curve B).

At the same time, the Applicant established that a curing step, preferably at a temperature close to the glass transition temperature of the polymer, can be used to reduce the degree of wear still further.

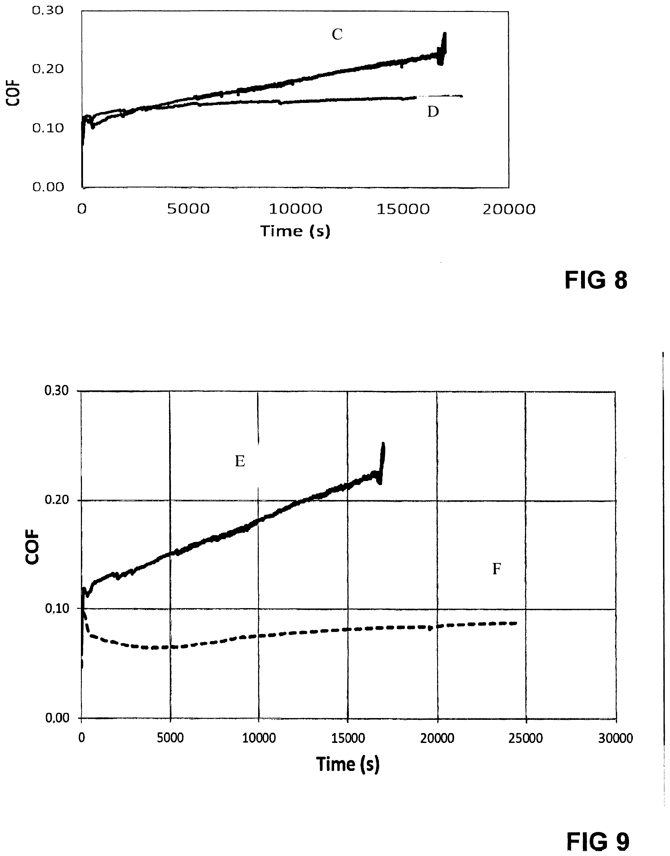

This test is illustrated in Figure 8, which represents the galling resistance of a XC48 carbon steel block phosphatized then coated with the dispersion with reference number 5 which has undergone curing at 300°C (curve C) and compared with that of a XC48 carbon steel block phosphatized coated with the dispersion with reference number 5 which has undergone curing at 275°C (curve D).

The Applicant has also established that the galling resistance is particularly improved by a sand blasting type surface treatment or by an electrolytic deposit of copper or a CuSnZn ternary alloy. For sand blasting, it is preferable to have a mean roughness departure or Ra in the range 1 to 3.5 µm and a maximum ridge depth or Rmax in the range 10 to 25 µm. The thickness of the film formed must be at least greater than the maximum depth of the ridges or Rmax.

At the same time, the Applicant developed an alternative to the dissolution process which consisted of directly incorporating the powdered polyamide-imide polymer into a mixture constituted by distilled water and DMSO, with vigorous agitation, in a weight ratio in the range 60:40 to 20:80, preferably a weight ratio of 30:70. After a minimum of 30 minutes agitation, the lubricating solids such as graphite and/or PTFE, had been incorporated. Agitation was maintained for 30 minutes. The dispersion was homogenized by an ultrasound treatment or by milling, then it was applied by spraying. The storage stability of this dispersion was determined to be satisfactory but limited (less than one month at 40°C), in contrast to that obtained by the process combining precipitation and fine milling.

The dispersion with reference number 6 was produced by dispersing 115 g of a polyamide-imide polymer (Torlon® 4000TF) slowly with agitation at 400 rpm in a mixture constituted by 455 g of DMSO (ROTIPURAN® ≥ 99.8%, p.a. ACS, ISO), 226 g of distilled water and 4 g of an organically modified laponite (Laponite® RDS). The DMSO/water mixture was heated to between 60°C and 80°C to ensure better dispersibility of the polymer. After a minimum of 30 minutes, 170 of bismuth trisulphide then 30 g of polytetrafluoroethylene (Xeon® F4) were incorporated into the above mixture with dispersion such that the weight ratio between the additives and the polyamide-imide resin was 1.75 and the concentration by volume of additives was a maximum of 25%. After milling for 24 hours, at least 90% of the particles in dispersion had a size of less than 15 µm.

The difference in the coefficient of friction as a function of the load, 0.06, was more advantageous than for the dry film comprising a fluoropolymer alone or in combination but as a consequence of higher friction, the abrasion resistance determined using the coefficient of friction and the galling resistance were beyond the values recorded for the dispersion with reference number 5.

The dispersion with reference number 7 was produced by dispersing 67 g of a polyamide-imide polymer (Torlon® 4000TF) slowly with agitation at 300 rpm in a mixture constituted by 419 g of distilled water, 374 g of DMSO (ROTIPURAN® ≥ 99.8%, p.a. ACS, ISO), 18 g of a non-ionic wetting agent (Surfynol® 440), 4 g of a polyphosphate modified synthetic silicate (Laponite® RDS), 3g of a solution of a polyether modified polydimethylsiloxane (Byk® 333) and 3 g of anti-foaming agent (Byk® 037). After one hour, the dispersion was subjected to an ultrasound generator for a minimum of 30 minutes for homogenization. After the ultrasound treatment, a suspension of polytetrafluoroethylene in water free of perfluorooctanoic acid and ethoxylated alkylphenol (Dyneon® TF5060GZ) was incorporated into the above dispersion with mechanical agitation such that the weight ratio between the additives and the polyamide-imide resin was 1 and that the concentration by volume of the additives was a maximum of 40%. After 30 minutes, the final dispersion was deflocculated using a rotor-stator disperser. The polyamide-imide particle size was in the range 60 to 70 µm.

Using this simplified process, the abrasion resistance determined from the coefficient of friction and the galling resistance were seen to have improved substantially, independently of the mean polyamide-imide particle size.

This is illustrated in Figure 9, which represents the galling resistance of a XC48 carbon steel phosphatized then coated with the dispersion with reference number 5 obtained by precipitation then milling (curve E) and compared with that of a XC48 carbon steel block phosphatized then coated with the dispersion with reference number 7 obtained by dispersion then homogenization (curve F).

In the dispersions with reference numbers 8 and 9, 75 g of a polyamide-imide polymer (Torlon® 4000TF) was dispersed slowly with agitation at 300 rpm at a temperature of 70°C in a homogeneous aqueous mixture constituted by 419 g of distilled water, 374 g of DMSO (DMSO Evol ® ≥ 99.7%, p.a.), 18 g of a non-ionic wetting agent (Surfynol® 440), 4 g of a polyphosphate modified synthetic silicate (Laponite® RDS), 3g of a solution of a polyether modified polydimethylsiloxane (Byk® 333) and 3 g of anti-foaming agent (Byk® 038). After one hour, the dispersion underwent horizontal milling under pressure using ceramic beads to homogenize it. After milling for 6 hours, at least 90% of the polyamide-imide particles had a size of less than 20 µm, and a bismuth trisulphide then a suspension of polytetrafluoroethylene in water free of perfluorooctanoic acid and ethoxylated alkylphenol (Dyneon® TF5060GZ) were incorporated into the above dispersion with mechanical agitation so that the ratio by weight between the solids and the polyamide-imide resin was respectively 1 and 1.75 and the critical pigment volume was a maximum of 40%. The weight ratio between the polytetrafluoroethylene and the bismuth trisulphide was 1.5 parts for 8.5 parts. The dispersions were applied by spraying and the film was formed over 30 minutes at 275°C. The thickness of the dry film was in the range 20 to 30 µm. In order to provide the higher galling resistance of a dry PAI film comprising a combination of solid lubricating particles with a synergistic effect, it is advantageous to have a ratio between the solids and the polyamide-imide resin of more than 1.

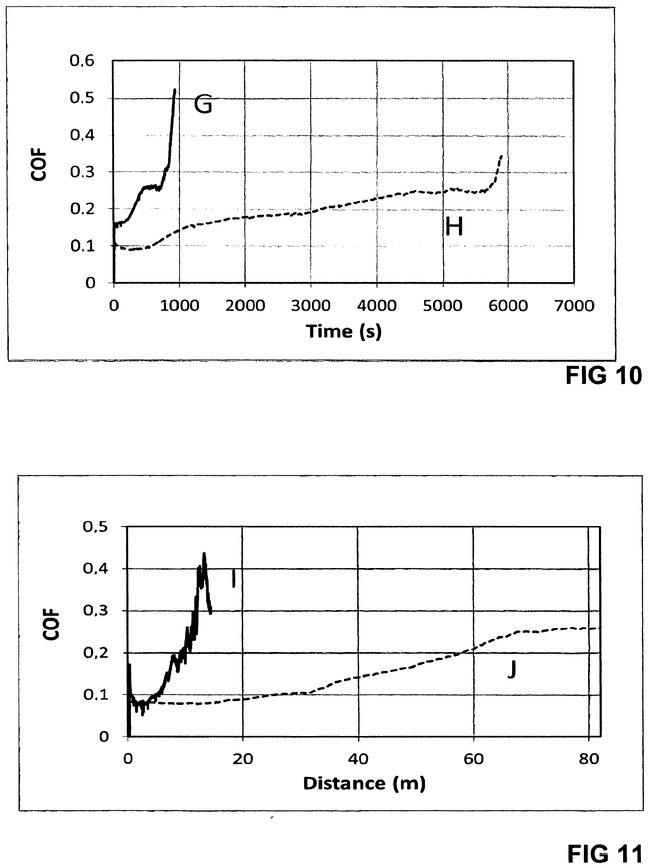

This is illustrated in Figure 10, which represents the galling resistance of a XC48 carbon steel phosphatized then coated with the dispersion with reference number 8 with a weight ratio between the solids and the polyamide-imide resin of 1 (curve G) and compared with that of a XC48 carbon steel block phosphatized then coated with the dispersion with reference number 9 with a weight ratio between the solids and the polyamide-imide resin of 1.75 (curve H).

The Applicant also compared the galling resistance of a dry film obtained in the present invention with the competition. In the dispersion with reference number 10, 67 g of a polyamide-imide polymer (Torlon® 4000TF) was dispersed slowly with agitation at 300 rpm at a temperature of 70°C in a homogeneous aqueous mixture constituted by 419 g of distilled water, 374 g of DMSO (DMSO Evol ® ≥ 99.7%, p.a.), 18g of a non-ionic wetting agent (Disperbyk® 190), 4 g of a polyphosphate modified synthetic silicate (Laponite® RDS), 3g of a polyether modified polydimethylsiloxane solution (Byk® 333) and 3 g of anti-foaming agent (Byk® 038). After one hour, the dispersion underwent recirculating horizontal milling using ceramic beads. After milling for 1 hour, at least 90% of the polyamide-imide particles had a size of less than 45 µm and a suspension of polytetrafluoroethylene in water free of perfluorooctanoic acid and ethoxylated alkylphenol (Dyneon® TF5060GZ) was incorporated into the above dispersion with mechanical agitation so that the ratio by weight between the solids and the polyamide-imide resin was equal to 1 and the critical pigment volume was a maximum of 40%.

The comparison was carried out using a pin-on-vee tribometer and the dispersion with reference number 10 was applied symmetrically onto a block of phosphatized XC48 carbon steel and onto a phosphatized XC48 carbon steel indenter. The thickness of the dry film was in the range 15 to 25 µm. In the competing tribosystem, a dry film comprising a mixture of solid lubricating particles of MoS₂ and graphite in an inorganic polymer was applied to the sand blasted XC48 carbon steel indenter (with a surface roughness corresponding to a maximum depth of ridges or Rmax of 20 µm) coated with a zinc-rich epoxy primer and a dry film comprising a mixture of PTFE and other friction modifying pigments in a reactive epoxy resin was applied to the XC48 phosphatized carbon steel block.

By applying the dry film of the present invention to both surfaces in contact, the value of the coefficient of friction was constant over a longer period after establishing the tribofilm and the galling resistance was substantially better than that of the competition.

This is illustrated in Figure 11, which represents the galling resistance of a tribosystem with the dispersion with reference number 10 (curve J) compared with that of a competing tribosystem (curve I).

In conclusion, the Applicant has established that applying polyamide-imide films starting from an aqueous dispersion of polyamide-imide free of carcinogenic, mutagenic and reprotoxic substances onto tubular elements intended for drilling and/or operating hydrocarbon wells has a number of advantages. The principal but non-exhaustive advantages are compliance with professional constraints limiting exposure to substances classified as carcinogenic, mutagenic and reprotoxic, compliance with extreme temperature constraints in wells which may reach a continuous 250°C, excellent film-forming properties, a reduction in the shear load and a highly satisfactory galling resistance, excellent adhesion to all metallic supports and very good resistance to corrosive agents.

## Claims

1. A process for producing a dry film with high galling resistance on a threaded element for drilling and/or operating a hydrocarbon well, **characterized in that** it comprises at least the following steps:
• forming a stable dispersion comprising a polyamide-imide powder, a polar aprotic solvent with a boiling point of more than 180°C at 1013 hPa (760 mm Hg), and water;
• applying the dispersion to one of the ends (1, 2) of said threaded element at a temperature in the range 20°C to 40°C;
• drying the coated end,
wherein said polar aprotic solvent is dimethylsulphoxide.

2. A process for producing a dry film on a threaded element according to claim 1, **characterized in that** the dispersion is produced with at least:
• a step in which the polyamide-imide powder is dissolved in the polar aprotic solvent with a boiling point of more than 180°C at 1013 hPa (760 mm Hg), in order to obtain a polyamide-imide solution;
• a step in which the polymer solution is precipitated in an aqueous mixture at ambient temperature;
• a step in which the precipitated solution is dispersed by milling the polyamide-imide particles.

3. A process for producing a dry film on a threaded element according to claim 1, **characterized in that** the dispersion is produced with at least:
• a step in which the polyamide-imide powder is dispersed by mechanical agitation in a homogeneous mixture containing water and a polar aprotic solvent with a boiling point of more than 180°C at 1013 hPa (760 mm Hg);
• a step in which the polyamide-imide dispersion is stabilized by means of a treatment with ultrasound or by milling.

4. A process for producing a dry film on a threaded element according to any one of the preceding claims, **characterized in that** the size of the polyamide-imide polymer particles in dispersion is less than 70 µm, measured in the liquid phase using a CILAS 1064 laser granulometer.

5. A process for producing a dry film on a threaded element according to any one of the preceding claims, **characterized in that** the aqueous polyamide-imide dispersion comprises a thixotropic agent which is thermally stable at temperatures of 250°C or more selected from the group constituted by organically modified sheet silicates of the laponite, saponite, bentonite or smectite type with a pH in 2% by weight suspension in the range 9 to 11.

6. A process for producing a dry film on a threaded element according to any one of the preceding claims, **characterized in that** the aqueous polyamide-imide dispersion comprises in the range 0.05% to 0.4% by weight of a bactericidal and/or fungicidal agent for protection in storage and for protection of the film, selected from the group constituted by iodopropynyl-butyl-carbamate, benzisothiazolinone, chloromethyl-isothiazolinone and methylisothiazolinone.

7. A process for producing a dry film on a threaded element according to any one of the preceding claims, **characterized in that** the aqueous polyamide-imide dispersion comprises a spreading agent of the polyether modified dimethylpolysiloxane type.

8. A process for producing a dry film on a threaded element according to any one of the preceding claims, **characterized in that** the aqueous polyamide-imide dispersion comprises an emulsion of hydrophobic components containing silicone and/or paraffinic mineral oils.

9. A process for producing a dry film on a threaded element according to any one of the preceding claims, **characterized in that** the polyamide-imide (PAI) powder is selected from aromatic polyamide-imide powders.

10. A process for producing a dry film on a threaded element according to any one of the preceding claims, **characterized in that** the stable dispersion further comprises solid lubricating particles selected from the list constituted by graphite, boron nitrides, Bi₂S₃, MoS₂, WS₂ and fluoropolymers.

11. A process for producing a dry film on a threaded element according to any one of the preceding claims, **characterized in that** the stable dispersion further comprises solid anti-abrasive particles selected from the list constituted by cristobalite, mica, colloidal silica, para-phenyleneterephthalamide (aramid) and silicone resin.

12. A process for producing a dry film on a threaded element according to any one of the preceding claims, **characterized in that** the step for applying the dispersion by spraying onto the end (1, 2) of the threaded element is completed by a supplemental step for curing said aqueous dispersion applied to the threaded element at temperatures in the range 230°C to 325°C.

13. A process for producing a dry film on a threaded element according to the preceding claim, **characterized in that** thickness of the dry film is greater than the roughness of the surface preparation and in the range 10 to 45 µm.

14. A process for producing a dry film on a threaded element according to any one of the preceding claims, **characterized in that** the dispersion is applied to the whole of the threaded zone (3, 4) of the threaded element (1, 2).

15. A process for producing a dry film on a threaded element according to any one of the preceding claims, **characterized in that** the dispersion is applied to the sealing surface (5, 6) of the threaded element (1, 2).

## Patentansprüche

1. Verfahren zum Herstellen eines Trockenfilms mit einer hohen Fressbeständigkeit auf einem Gewindeelement zum Bohren und/oder Betreiben eines Kohlenwasserstoffbohrlochs, **dadurch gekennzeichnet, dass** es mindestens einen der folgenden Schritte umfasst:
• Bildung einer stabilen Dispersion umfassend ein Polyamid-Imid-Pulver, ein polares aprotisches Lösungsmittel mit einem Siedepunkt von über 180 °C bei 1013 hPa (760 mm Hg) und Wasser;
• Anwenden der Dispersion auf eines der Enden (1,2) besagten Gewindeelements bei einer Temperatur im Bereich von 20 °C bis 40 °C;
• Trocknen des beschichteten Endes,
wobei besagtes polares aprotisches Lösungsmittel Dimethylsulphoxid ist.

2. Verfahren zum Herstellen eines Trockenfilms auf einem Gewindeelement nach Anspruch 1, **dadurch gekennzeichnet, dass** die Dispersion hergestellt wird mit mindestens:
• einem Schritt, in dem das Polyamid-Imid-Pulver in dem polaren aprotischen Lösungsmittel mit einem Siedepunkt von über 180 °C bei 1013 hPa (760 mm Hg) gelöst wird, um eine Polyamid-Imid-Lösung zu erhalten;
• einem Schritt, in dem die Polymer-Lösung bei Umgebungstemperatur in einem wässrigen Gemisch ausgefällt wird;
• einem Schritt, in dem die ausgefällte Lösung durch Mahlen der Polyamid-Imid-Partikel dispergiert wird.

3. Verfahren zum Herstellen eines Trockenfilms auf einem Gewindeelement nach Anspruch 1, **dadurch gekennzeichnet, dass** die Dispersion hergestellt wird mit mindestens:
• einem Schritt, in dem das Polyamid-Imid-Pulver durch mechanische Agitation in einer homogenen, Wasser und ein polares aprotisches Lösungsmittel mit einem Siedepunkt von über 180 °C bei 1013 hPa (760 mm Hg) enthaltenden Mischung dispergiert wird;
• einem Schritt, in dem die Polyamid-Imid-Dispersion mittels einer Ultraschallbehandlung oder durch Mahlen stabilisiert wird.

4. Verfahren zum Herstellen eines Trockenfilms auf einem Gewindeelement nach einem beliebigen der vorstehenden Ansprüche, **dadurch gekennzeichnet, dass** die Größe der Polyamid-Imid-Partikel in Dispersion kleiner als 70 µm ist, gemessen in der Flüssigphase mittels eines CILAS 1064 Lasergranulometers.

5. Verfahren zum Herstellen eines Trockenfilms auf einem Gewindeelement nach einem beliebigen der vorstehenden Ansprüche, **dadurch gekennzeichnet, dass** die wässrige Polyamid-Imid-Dispersion ein thixotropes Mittel umfasst, das bei Temperaturen von 250 °C oder höher thermisch stabil ist, ausgewählt aus der Gruppe, die gebildet wird aus organisch modifizierten Schichtsilikaten vom Typ Laponit, Saponit, Bentonit oder Smektit mit einem pH-Wert im Bereich von 9 bis 11 in einer Suspension von 2 Gewichtsprozent.

6. Verfahren zum Herstellen eines Trockenfilms auf einem Gewindeelement nach einem beliebigen der vorstehenden Ansprüche, **dadurch gekennzeichnet, dass** die wässrige Polyamid-Imid-Dispersion im Bereich von 0,05 bis 0,4 Gewichtsprozent ein bakterizides und/oder fungizides Mittel zum Schutz bei Lagerung und zum Schutz des Films umfasst, ausgewählt aus der Gruppe, die gebildet wird durch lodopropynylbutylcarbamat, Benzisothiazolinon, Chloromethylisothiazolinon und Methylisothiazolinon.

7. Verfahren zum Herstellen eines Trockenfilms auf einem Gewindeelement nach einem beliebigen der vorstehenden Ansprüche, **dadurch gekennzeichnet, dass** die wässrige Polyamid-Imid-Dispersion ein Spreitmittel umfasst vom Typ Polyether-modifiziertes Dimethylpolysiloxan.

8. Verfahren zum Herstellen eines Trockenfilms auf einem Gewindeelement nach einem beliebigen der vorstehenden Ansprüche, **dadurch gekennzeichnet, dass** die wässrige Polyamid-Imid-Dispersion eine Emulsion hydrophober Komponenten umfasst, die Silikon und/oder paraffinische Mineralöle enthält.

9. Verfahren zum Herstellen eines Trockenfilms auf einem Gewindeelement nach einem beliebigen der vorstehenden Ansprüche, **dadurch gekennzeichnet, dass** das Polyamid-Imid-(PAI)-Pulver ausgewählt wird aus aromatischen Polyamid-Imid-Pulvern.

10. Verfahren zum Herstellen eines Trockenfilms auf einem Gewindeelement nach einem beliebigen der vorstehenden Ansprüche, **dadurch gekennzeichnet, dass** die stabile Dispersion weiterhin feste Schmierstoffpartikel umfasst, die ausgewählt wurden aus der Liste, die gebildet wird aus Graphit, Bornitriden, Bi₂S₃, MOS₂, WS₂ und Fluorpolymeren.

11. Verfahren zum Herstellen eines Trockenfilms auf einem Gewindeelement nach einem beliebigen der vorstehenden Ansprüche, **dadurch gekennzeichnet, dass** die stabile Dispersion weiterhin feste abriebfeste Partikel umfasst, die ausgewählt wurden aus der Liste, die gebildet wird aus Cristobalit, Glimmer, kolloidaler Kieselsäure, Para-Phenylenterephthalamid (Aramid) und Silikonharz.

12. Verfahren zum Herstellen eines Trockenfilms auf einem Gewindeelement nach einem beliebigen der vorstehenden Ansprüche, **dadurch gekennzeichnet, dass** der Schritt des Aufbringens der Dispersion durch Sprühen auf das Ende (1, 2) des Gewindeelements ergänzt wird durch einen Zusatzschritt zum Härten besagter wässriger Dispersion, die auf das Gewindeelement bei Temperaturen im Bereich von 230 °C bis 325 °C aufgetragen wird.

13. Verfahren zum Herstellen eines Trockenfilms auf einem Gewindeelement nach dem vorstehenden Anspruch, **dadurch gekennzeichnet, dass** die Dicke des Trockenfilms größer ist als die Rauigkeit der Oberflächenvorbehandlung und im Bereich von 10 bis 45 pm liegt.

14. Verfahren zum Herstellen eines Trockenfilms auf einem Gewindeelement nach einem beliebigen der vorstehenden Ansprüche, **dadurch gekennzeichnet, dass** die Dispersion auf die gesamte Gewindefläche (3, 4) des Gewindeelements (1, 2) aufgebracht wird.

15. Verfahren zum Herstellen eines Trockenfilms auf einem Gewindeelement nach einem beliebigen der vorstehenden Ansprüche, **dadurch gekennzeichnet, dass** die Dispersion auf die Dichtfläche (5, 6) des Gewindeelements (1,2) aufgebracht wird.

## Revendications

1. Procédé de fabrication d'un film sec présentant une résistance élevée au grippage sur un élément fileté pour le forage et/ou le reconditionnement d'un puits d'hydrocarbures, **caractérisé en ce qu'**il comprend au moins les étapes suivantes :
• formation d'une dispersion stable comprenant une poudre de polyamide-imide, un solvant aprotique polaire avec un point d'ébullition supérieur à 180 °C à 1 013 hPa (760 mm Hg) et de l'eau ;
• application de la dispersion sur l'une des extrémités (1,2) dudit élément fileté à une température comprise dans la plage allant de 20 à 40 °C ;
• séchage de l'extrémité revêtue,
durant lequel ledit solvant aprotique polaire est du diméthylsulphoxyde.

2. Procédé de fabrication d'un film sec sur un élément fileté selon la revendication 1, **caractérisé en ce que** la dispersion est produite avec au moins :
• une étape au cours de laquelle la poudre de polyamide-imide est dissoute dans le solvant aprotique polaire avec un point d'ébullition supérieur à 180 °C à 1 013 hPa (760 mm Hg), afin d'obtenir une solution de polyamide-imide ;
• une étape au cours de laquelle la solution polymère est précipitée dans un mélange aqueux à température ambiante ;
• une étape au cours de laquelle la solution précipitée est dispersée en broyant les particules de polyamide-imide.

3. Procédé de fabrication d'un film sec sur un élément fileté selon la revendication 1, **caractérisé en ce que** la dispersion est produite avec au moins :
• une étape au cours de laquelle la poudre de polyamide-imide est dispersée par agitation mécanique dans un mélange homogène contenant de l'eau et un solvant aprotique polaire avec un point d'ébullition supérieur à 180 °C à 1 013 hPa (760 mm Hg) ;
• une étape au cours de laquelle la dispersion de polyamide-imide est stabilisée à l'aide d'un traitement par ultrasons ou par broyage.

4. Procédé de fabrication d'un film sec sur un élément fileté selon l'une des revendications précédentes, **caractérisé en ce que** la taille des particules de polymère polyamide-imide dans la dispersion est inférieure à 70 µm, mesurée dans la phase liquide à l'aide d'un granulomètre laser CILAS 1064.

5. Procédé de fabrication d'un film sec sur un élément fileté selon l'une des revendications précédentes, **caractérisé en ce que** la dispersion aqueuse de polyamide-imide comprend un agent thixotropique thermiquement stable à des températures de 250 °C ou plus, choisi parmi le groupe constitué de silicates feuilletés organiquement modifiés de type laponite, saponite, bentonite ou smectite avec un pH de 2 % en poids de suspension dans la plage comprise entre 9 et 11.

6. Procédé de fabrication d'un film sec sur un élément fileté selon l'une des revendications précédentes, **caractérisé en ce que** la dispersion aqueuse de polyamide-imide comprend dans la plage allant de 0,05 à 0,4 % en poids un agent bactéricide et/ou fongicide pour la protection lors du stockage et la protection du film, choisi parmi le groupe constitué d'iodopropynyle butyle carbamate, de benzisothiazolinone, de chlorométhyle-isothiazolinone et de méthylisothiazolinone.

7. Procédé de fabrication d'un film sec sur un élément fileté selon l'une des revendications précédentes, **caractérisé en ce que** la dispersion aqueuse de polyamide-imide comprend un agent de dispersion de type diméthylpolysiloxane modifié par un polyéther.

8. Procédé de fabrication d'un film sec sur un élément fileté selon l'une des revendications précédentes, **caractérisé en ce que** la dispersion aqueuse de polyamide-imide comprend une émulsion de composants hydrophobes contenant du silicone et/ou des huiles minérales paraffiniques.

9. Procédé de fabrication d'un film sec sur un élément fileté selon l'une des revendications précédentes, **caractérisé en ce que** la poudre de polyamide-imide (PAI) est choisie parmi des poudres aromatiques de polyamide-imide.

10. Procédé de fabrication d'un film sec sur un élément fileté selon l'une des revendications précédentes, **caractérisé en ce que** la dispersion stable comprend en outre des particules lubrifiantes solides choisies parmi la liste constituée de graphite, de nitrures de bore, Bi₂S₃, MoS₂, WS₂ et polymères fluorés.

11. Procédé de fabrication d'un film sec sur un élément fileté selon l'une des revendications précédentes, **caractérisé en ce que** la dispersion stable comprend en outre des particules anti-abrasives solides choisies parmi la liste constituée de cristobalite, de mica, de silice colloïdale, de paraphénylène-téréphtalamide (aramide) et de résine de silicone.

12. Procédé de fabrication d'un film sec sur un élément fileté selon l'une des revendications précédentes, **caractérisé en ce que** l'étape d'application de la dispersion par pulvérisation sur l'extrémité (1,2) de l'élément fileté est complétée par une étape supplémentaire de durcissement de ladite dispersion aqueuse appliquée sur l'élément fileté à des températures comprises dans la plage allant de 230 à 325 °C.

13. Procédé de fabrication d'un film sec sur un élément fileté selon la revendication précédente, **caractérisé en ce que** l'épaisseur du film sec est supérieure à la rugosité de la préparation de surface et se situe dans la plage allant de 10 à 45 µm.

14. Procédé de fabrication d'un film sec sur un élément fileté selon l'une des revendications précédentes, **caractérisé en ce que** la dispersion est appliquée sur l'ensemble de la zone filetée (3,4) de l'élément fileté (1,2).

15. Procédé de fabrication d'un film sec sur un élément fileté selon l'une des revendications précédentes, **caractérisé en ce que** la dispersion est appliquée sur la portée d'étanchéité (5,6) de l'élément fileté (1,2).
